# EUROPEAN PATENT APPLICATION

(11) **EP 4 650 998 A1**
(43) Date of publication of application: **19.11.2025**
(21) Application number: 24830059.2
(22) Date of filing: 09.04.2024
(51) Int. Cl.: G06F 21/53, G06F 9/54

(54) **INTER-APPLICATION DATA SHARING METHOD AND ELECTRONIC DEVICE**

(30) Priority: 30.06.2023 CN 202310799094
(71) Applicant: Huawei Technologies Co., Ltd., Shenzhen, Guangdong 518129 (CN)
(72) Inventor: LI, Kailong, Shenzhen, Guangdong 518129 (CN); WANG, Genliang, Shenzhen, Guangdong 518129 (CN); QIANG, Bo, Shenzhen, Guangdong 518129 (CN)
(74) Representative: MERH-IP Matias Erny Reichl Hoffmann Patentanwälte PartG mbB
(86) International application number: PCT/CN2024/086860
(87) International publication number: WO 2025/001409

(57) **Abstract**

Disclosed are an inter-application data sharing method and an electronic device, and the method is applied to an electronic device, to reduce resource waste and improve efficiency of data sharing between a plurality of applications. The method includes: running a first application in response to a first operation of a user; determining a shared sandbox corresponding to the first application, and writing first data of the first application to the shared sandbox, where the first data is used for sharing with a second application; and running the second application in response to a second operation of the user, and reading the first data from the shared sandbox. The first application and the second application may separately write and read the data in the shared sandbox. Therefore, this can reduce storage resources and resource waste that are caused by partial data overlap between applications, and improve efficiency of data sharing.

## Description

### CROSS-REFERENCE TO RELATED APPLICATIONS

This application claims priority to Chinese Patent Application No. 202310799094.2, filed with the China National Intellectual Property Administration on June 30, 2023 and entitled "INTER-APPLICATION DATA SHARING METHOD AND ELECTRONIC DEVICE", which is incorporated herein by reference in its entirety.

### TECHNICAL FIELD

This application relates to the field of terminal technologies, and in particular, to an inter-application data sharing method and an electronic device.

### BACKGROUND

An operating system (operating system, OS) is a set of interrelated system software programs that manage and control computer operations, use and run hardware and software resources, and provide public services to organize user interaction. The operating system includes a mobile phone operating system, and an application running on the mobile phone operating system is referred to as an application program (application, APP), which is briefly referred to as an application. For each application, the system creates a dedicated application sandbox directory in storage space. The application can store and process data of the application in the application sandbox directory. In the dedicated application sandbox directory, the application can view only the data of the current application. Correspondingly, a file in the dedicated application sandbox directory is not visible to other applications. In this case, when different applications run in different application sandboxes, data of the different applications is completely isolated. This can ensure data security of the applications but restricts inter-application data sharing.

In some actual running scenarios, there is a need for data synchronization between a plurality of applications. For example, step count information needs to be consistent between an application A and an application B; and the application A, the application B, and an application C all need to conform to a same display status (for example, a night mode). Based on this, inter-application data synchronization needs to be implemented through cloud communication or local inter-process communication. Therefore, this results in data redundancy, resource waste, and poor efficiency and performance of data synchronization.

### SUMMARY

Embodiments of this application provide an inter-application data sharing method and an electronic device, to reduce resource waste and improve efficiency of data sharing between a plurality of applications.

According to a first aspect, an embodiment of this application provides an inter-application data sharing method, applied to an electronic device. The method may be performed by the electronic device, or a component like a chip, a processor, or a chip system in the device. This is not limited in this embodiment of this application. The following uses an example in which the electronic device performs the method for description. The method includes: The electronic device runs a first application in response to a first operation of a user; the electronic device determines a shared sandbox corresponding to the first application, and the electronic device writes first data of the first application to the shared sandbox, where the first data is used for sharing with a second application; and the electronic device runs the second application in response to a second operation of the user, and the electronic device reads the first data from the shared sandbox.

According to this method, the first application and the second application in the electronic device may separately write and read the data in the shared sandbox. Therefore, data sharing between the first application and the second application can be implemented when there is an isolation mechanism between application sandboxes of different applications. This reduces resource waste, improves efficiency of data sharing, and consequently enhances user experience.

In a possible design, before the electronic device writes the first data, the method further includes: The electronic device creates the shared sandbox based on the first application and the second application; and the electronic device establishes a first mapping relationship, where the first mapping relationship is a mapping relationship between a directory of a first application sandbox and a directory of the shared sandbox, and the first application sandbox is data storage space corresponding to the first application.

According to this design, the electronic device may create the shared sandbox, and establish the mapping relationship between the directory of the first application sandbox and the directory of the shared sandbox, so that the first application can determine the shared sandbox by using the directory of the first application sandbox, improving efficiency of data sharing.

In a possible design, the electronic device establishes a second mapping relationship, where the second mapping relationship is a mapping relationship between a directory of a second application sandbox and the directory of the shared sandbox, and the second application sandbox is data storage space corresponding to the second application.

According to this design, the electronic device may establish the mapping relationship between the directory of the second application sandbox and the directory of the shared sandbox, to determine the shared sandbox by using the directory of the second application sandbox when there is an isolation mechanism in the second application, improving efficiency of data sharing.

In a possible design, a signature certificate of the first application includes a first sharing identifier, and a signature certificate of the second application includes a second sharing identifier; the first sharing identifier is the same as the second sharing identifier; and that the electronic device creates the shared sandbox includes: The electronic device creates the shared sandbox based on the first sharing identifier or the second sharing identifier.

According to this design, a sharing identifier is configured on an application, so that an identity of an application that accesses the shared sandbox can be determined based on a sharing identifier of the shared sandbox and sharing identifiers of different applications. This reduces a probability that the data in the shared sandbox is maliciously tampered with or stolen, and improves data security.

In a possible design, that the electronic device determines the shared sandbox corresponding to the first application includes: The electronic device determines the shared sandbox based on the directory of the first application sandbox and the first mapping relationship; and that the electronic device reads the first data from the shared sandbox includes: The electronic device determines the shared sandbox based on the directory of the second application sandbox and the second mapping relationship; and the electronic device reads the first data from the shared sandbox.

According to this design, based on the first mapping relationship and the second mapping relationship, the first application and the second application may determine the shared sandbox by using directories of respective application sandboxes, to write and read the data in the shared sandbox.

In a possible design, that the electronic device runs the second application in response to the second operation of the user includes: The electronic device detects an interface jump instruction on a user interface of the first application; in response to the interface jump instruction, the electronic device switches the first application from foreground running to background running; and the electronic device runs the second application, and displays a user interface of the second application.

According to this design, the electronic device can directly jump between user interfaces of different applications when detecting the interface jump instruction. In comparison with a conventional method in which a user authorizes determining of whether to jump, this design can reduce redundant user operations when it is determined that data sharing can be implemented between a plurality of applications, and improve user experience.

In a possible design, the user interface of the first application is a first login interface, the user interface of the second application is a second login interface, and the first data includes account data and password data.

In a possible design, the first application and at least one target application have a same service function; the second application is one of the at least one target application; and before the electronic device determines the shared sandbox corresponding to the first application, the method further includes: The electronic device determines that the first data is data of the same service function.

According to this design, the first application may determine, based on the service function to which the first data belongs, that the shared sandbox to which the first data is written is a shared sandbox between the first application and the second application, to prevent the first data from being read by another application. This design can improve data security.

In a possible design, the first data is configuration information, and the method further includes: When running the second application, the electronic device may update a configuration file of the second application based on the configuration information.

According to this design, the first application and the second application may update configuration files based on the foregoing inter-application data sharing method. This reduces user operations, and enhances user experience.

According to a second aspect, an embodiment of this application provides an inter-application data sharing apparatus. The data sharing apparatus includes modules/units for performing the method according to the first aspect or any one of the possible designs of the first aspect. These modules/units may be implemented by hardware, or may be implemented by hardware executing corresponding software.

According to a third aspect, this application further provides an electronic device, including a processor, a micro control unit, and a memory. The memory is configured to store one or more computer programs. When the one or more computer programs stored in the memory are executed by the processor and the micro control unit, the electronic device is enabled to perform the inter-application data sharing method according to the first aspect or any one of the possible designs of the first aspect.

According to a fourth aspect, this application further provides an electronic device, including a micro control unit and a memory. The memory is configured to store one or more computer programs. When the one or more computer programs stored in the memory are executed by the micro control unit, the electronic device is enabled to perform the inter-application data sharing method according to the first aspect or any one of the possible designs of the first aspect.

According to a fifth aspect, this application further provides a computer-readable storage medium. The computer-readable storage medium stores instructions. When the instructions are run on an electronic device, the electronic device is enabled to perform the inter-application data sharing method according to the first aspect or any one of the possible designs of the first aspect.

According to a sixth aspect, this application further provides a computer program product. When the computer program product runs on an electronic device, the electronic device is enabled to perform the method according to the first aspect or any one of the possible designs of the first aspect.

According to a seventh aspect, an embodiment of this application further provides a chip. The chip includes a processor and a micro control unit. The processor sends accessory management information to the micro control unit, and the micro control unit implements the inter-application data sharing method according to the first aspect or any one of the possible designs of the first aspect based on the accessory management information.

According to an eighth aspect, an embodiment of this application further provides a chip system. The chip system includes a processor, configured to support a computer apparatus in implementing the inter-application data sharing method according to the first aspect or any one of the possible designs of the first aspect. In a possible design, the chip system further includes a memory, and the memory is configured to store a program and data that are necessary for the computer apparatus. The chip system may include a chip, or may include a chip and another discrete component.

For technical effects that can be achieved in any one of the second aspect to the eighth aspect, refer to descriptions of technical effects that can be achieved in any one of the possible designs of the first aspect. Details are not described herein again.

### BRIEF DESCRIPTION OF DRAWINGS

FIG. 1 is a diagram of a hardware structure of an electronic device according to an embodiment of this application;
FIG. 2 is a block diagram of a software structure of an electronic device according to an embodiment of this application;
FIG. 3a is a diagram of a display interface of an electronic device according to an embodiment of this application;
FIG. 3b is a diagram of a display interface of another electronic device according to an embodiment of this application;
FIG. 3c is an example diagram of a procedure of releasing an application according to an embodiment of this application;
FIG. 3d is a diagram of a display interface of another electronic device according to an embodiment of this application;
FIG. 4 is a schematic flowchart of an inter-application data sharing method according to an embodiment of this application;
FIG. 5a is an example diagram of a directory mapping method according to an embodiment of this application; and
FIG. 5b is an example diagram of another directory mapping method according to an embodiment of this application.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

In descriptions of embodiments of this application, the term "and/or" describes an association relationship between associated objects and indicates that three relationships may exist. For example, A and/or B may indicate the following three cases: Only A exists, both A and B exist, and only B exists. In this application, "a plurality of" means two or more. In addition, it should be understood that in the descriptions of this application, terms such as "first" and "second" are merely used for distinguishing and description, but should not be understood as indicating or implying relative importance, or should not be understood as indicating or implying a sequence.

In the following, some terms in this application are described, to help a person skilled in the art have a better understanding.
(1) Application program: briefly referred to as an application, and is a software program that can implement one or more specific functions. Usually, a plurality of applications may be installed on the electronic device, like a camera application, a messaging application, an email application, a video application, and a music application. The application mentioned below may be an application installed before the electronic device is delivered from a factory, or may be an application downloaded from a network or obtained from another electronic device by a user during use of the electronic device.

The application program may be an instant application (instant APP, IAPP), and the instant application does not need to be explicitly installed or uninstalled. The instant application does not need to be explicitly installed, and may be used after being installed by a system program framework in a background. Uninstallation of the instant application may be controlled by the system program framework in the background. In some examples, the instant application includes a quick application, a mini program, a service widget, and the like.

(2) Application sandbox (application sandbox): The application sandbox isolates system resources by using an access control mechanism like discretionary access control (discretionary access control, DAC) or mandatory access control (mandatory access control, MAC), to protect applications and a system from an attack by a malicious application.

It should be noted that the application sandbox is an isolation mechanism for security protection, to prevent data from being accessed through a malicious path. Therefore, in such a sandbox protection mechanism, a data range visible to an application may be only data stored in the application sandbox. For an application that uses an isolation mechanism, an operating system of an electronic device maps a dedicated application sandbox in internal storage space. In other words, an attribute of a file in the application sandbox is private (private). The application sandbox corresponds to an interface cacheDir used to obtain a cache directory, and an interface filesDir used to obtain a file directory.

In some examples, an application sandbox directory includes a directory of an application file. The directory of the application file is a directory added by the electronic device for an application in internal storage space after the application is installed. The directory may be, for example, data/data/com.xxx.xx.

In some other instances, an application sandbox directory may further include a directory in which some system files (for example, a small quantity of system files needed for application running) are located.

It should be understood that, for an application sandbox directory of an application, another application cannot access a file in the directory. Accordingly, when the application is uninstalled, all files in the application sandbox directory are removed.

(3) Releasing: uploading a developed application program (APP) to an application market. A released application may be downloaded and used by a user.

In some scenarios, the user installs a growing number of applications on an electronic device, for example, a mobile phone. These applications separately generate large amounts of data during use. Some data generated by different applications overlaps. Therefore, data of the applications occupies large storage space. Storage space of the mobile phone decreases over time with use.

In view of this, this application provides an inter-application data sharing method. According to the method, data sharing may be performed on overlapping data between a plurality of applications, to save storage space occupied by the applications. This improves storage space utilization and enhances user experience.

It should be noted that the inter-application data sharing method provided in this embodiment of this application may be applied to an electronic device, which may also be referred to as user equipment (user equipment, UE), a mobile station (mobile station, MS), a mobile terminal (mobile terminal, MT), or the like. The electronic device is a device that provides voice or data connectivity for a user, or may be an internet of things device. For example, the electronic device includes a handheld device, a vehicle-mounted device, or the like that has a wireless connection function. Currently, the electronic device may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. Alternatively, the electronic device may be a device that functions as a terminal in device to device (device to device, D2D) communication. The electronic device in embodiments of this application may be a foldable electronic device, for example, a foldable mobile phone or a foldable tablet computer. This is not limited in this application. In addition, an example embodiment of the electronic device includes but is not limited to an electronic device carrying iOS^{®}, Android^{®}, Microsoft^{®}, HarmonyOS^{®} (HarmonyOS^{®}), or another operating system.

The following uses a mobile phone as an example to describe a structure of the electronic device.

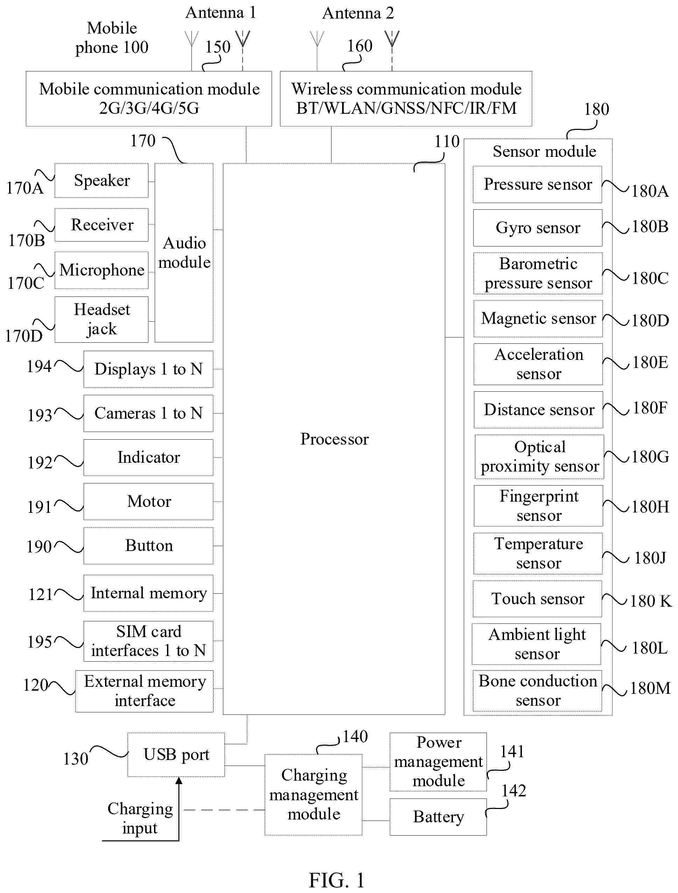

As shown in FIG. 1, a mobile phone 100 may include a processor 110, an external memory interface 120, an internal memory 121, a universal serial bus (universal serial bus, USB) port 130, a charging management module 140, a power management module 141, a battery 142, an antenna 1, an antenna 2, mobile communication module 150, wireless communication module 160, an audio module 170, a speaker 170A, a receiver 170B, a microphone 170C, a headset jack 170D, a sensor module 180, a button 190, a motor 191, an indicator 192, a camera 193, a display 194, and a subscriber identity module (subscriber identity module, SIM) interface 195. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a neural center and a command center of the mobile phone 100. The controller may generate an operation control signal based on an instruction operation code and a time sequence signal, to complete control of instruction fetch and instruction execution. A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB port 130 is an interface that conforms to a USB standard specification, and may be specifically a mini USB port, a micro USB port, a USB type-C port, or the like. The USB port 130 may be configured to connect to a charger to charge the mobile phone 100, or may be configured to transmit data between the mobile phone 100 and a peripheral device. The charging management module 140 is configured to receive a charging input from a charger. The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the mobile phone 100 may be configured to cover a single or a plurality of communication frequency bands. Different antennas may be further reused, to improve antenna utilization.

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1.

The camera 193 is configured to capture a static image or a video. The camera 193 may include a front-facing camera and a rear-facing camera.

The internal memory 121 may be configured to store computer-executable program code. The executable program code includes instructions. The processor 110 executes various functional applications of the mobile phone 100 and data processing by running instructions stored in the internal memory 121. The internal memory 121 may include a program storage area and a data storage area. The program storage area may store an operating system, software code of at least one application program (like an iQIYI application or a WeChat application), and the like. The data storage area may store data (for example, an image and a video) and the like generated during use of the mobile phone 100. In addition, the internal memory 121 may include a high-speed random access memory, or may include a non-volatile memory, for example, at least one magnetic disk storage device, a flash memory, or a universal flash storage (universal flash storage, UFS).

The external memory interface 120 may be used to connect to an external storage card, for example, a micro SD card, to extend a storage capability of the mobile phone 100. The external memory card communicates with the processor 110 through the external memory interface 120, to implement a data storage function. For example, files such as pictures or videos are stored in the external memory card.

The mobile phone 100 may implement audio functions such as music playing and recording by using the audio module 170, the speaker 170A, the receiver 170B, the microphone 170C, the headset jack 170D, the application processor, and the like.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the mobile phone 100 at a location different from a location of the display 194.

The button 190 includes a power button, a volume button, and the like. The button 190 may be a mechanical button, or may be a touch button. The mobile phone 100 may receive a button input, and generate a button signal input related to user setting and function control of the mobile phone 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or pulled out of the SIM card interface 195, to implement contact with or separation from the mobile phone 100.

It may be understood that the components shown in FIG. 1 do not constitute a specific limitation on a mobile phone. The mobile phone may further include more or fewer components than those shown in the figure, or some components may be combined, or some components may be split, or different component arrangements may be used.

A software system of the mobile phone 100 may use a layered architecture, including an event-driven architecture, a microkernel architecture, a microservice architecture, or a cloud architecture. In an embodiment of this application, an Android system of the hierarchical architecture is used as an example to describe a software structure of the mobile phone 100. It should be understood that a system in embodiments of this application may alternatively be HarmonyOS^{®}. This is not limited in this application.

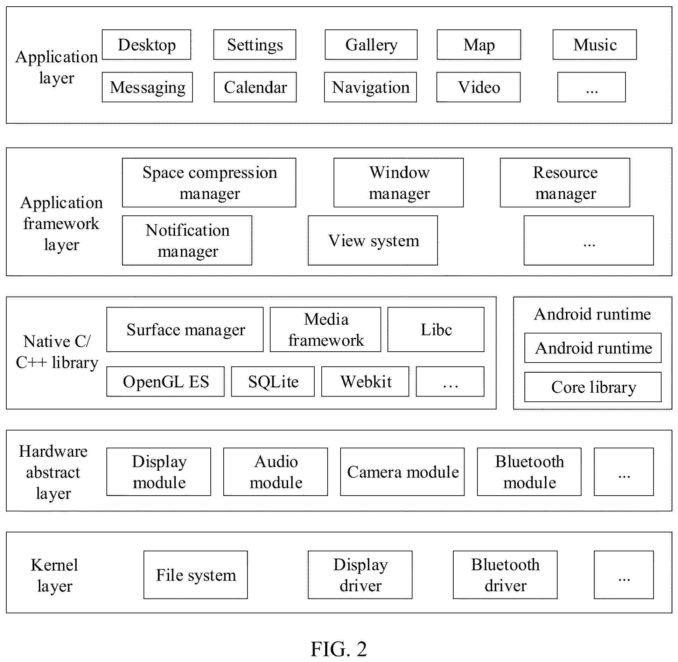

The following describes the software structure of the electronic device with reference to different scenarios. FIG. 2 is a block diagram of a software structure of the mobile phone 100 according to an embodiment of this application. In a layered architecture, software is divided into several layers, and each layer has a clear role and task. The layers communicate with each other through a software interface. In some embodiments, an Android system is divided into five layers: an application layer, an application framework layer, Android runtime (Android runtime, ART) and a native C/C++ library, a hardware abstract layer (hardware abstract layer, HAL), and a kernel layer from top to bottom.

The application layer may include a series of application packages. As shown in FIG. 2, the application packages may include applications such as desktop, settings, gallery, calendar, phone, map, navigation, music, video, and messaging.

The application framework layer provides an application programming interface (application programming interface, API) and a programming framework for an application at the application layer. The application framework layer includes some predefined functions. As shown in FIG. 2, the application framework layer may include a space compression manager, a window manager, a content provider, a view system, a resource manager, a notification manager, an activity manager, an input manager, and the like.

The Android runtime includes a core library and Android runtime. The Android runtime is responsible for converting source code into machine code. The Android runtime mainly includes an ahead of time (ahead of time, AOT) compilation technology and a just in time (just in time, JIT) compilation technology.

The core library is mainly used to provide functions of basic Java libraries, such as a basic data structure library, a mathematics library, an I/O library, a tool library, a database, and a network library. The core library provides the API for the user to develop the Android application.

The native C/C++ library may include a plurality of functional modules, such as a surface manager (surface manager), a media framework (Media Framework), libc, OpenGL ES, SQLite, and Webkit.

The hardware abstraction layer runs in user space (user space), encapsulates a kernel layer driver, and provides an interface for an upper layer to invoke.

The kernel layer is a layer between hardware and software. The kernel layer includes at least a file system, a display driver, a Bluetooth driver, a camera driver, an audio driver, and a sensor driver. The file system can provide a file compression capability.

In some embodiments of this application, the electronic device supports a plurality of applications, for example, one or more of the following applications: an application A, an application B, an application C, an instant application a1, an instant application a2, and an instant application b1. The instant application is not limited to running in a form of a widget-type desktop element, for example, a service widget, a desktop widget on a host (a desktop, a service center, or the like) of the application. For ease of understanding, simple examples of interfaces of the electronic device are used in embodiments of this application.

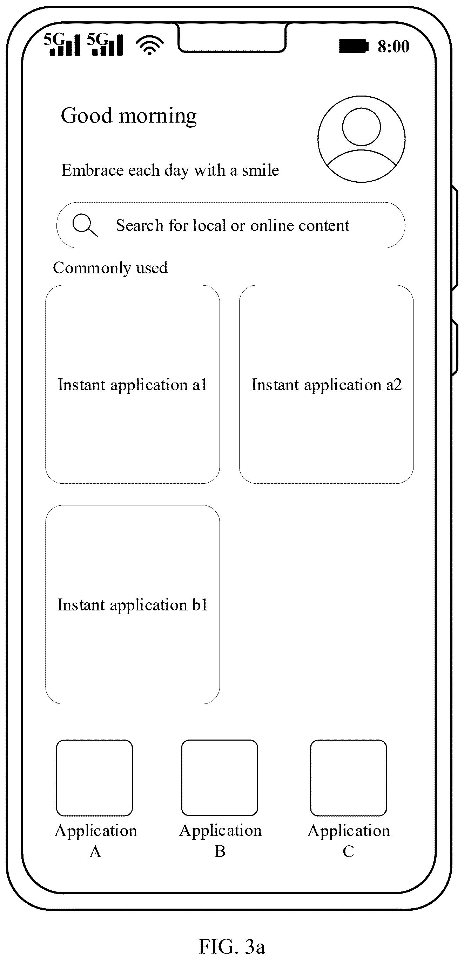

For example, when the electronic device is a mobile phone, as shown in FIG. 3a, an icon of an application and a service widget of an instant application may be displayed on a home screen of the mobile phone, that is, icons of an application A, an application B, and an application C may be displayed on the screen of the mobile phone, and service widgets of an instant application a1, an instant application a2, and an instant application b1 may be further displayed.

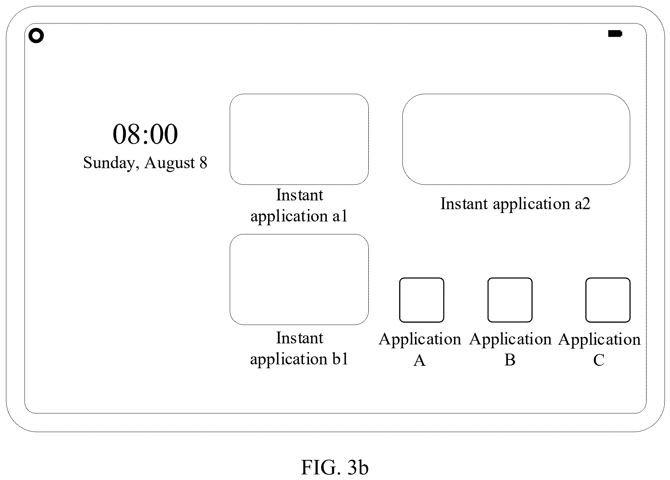

For another example, when the electronic device is a tablet computer, as shown in FIG. 3b, an icon of an application and a service widget of an instant application may be displayed on a home screen of the tablet computer, that is, icons of an application A, an application B, and an application C may be displayed on the screen of the tablet computer, and service widgets of an instant application a1, an instant application a2, and an instant application b1 may be further displayed.

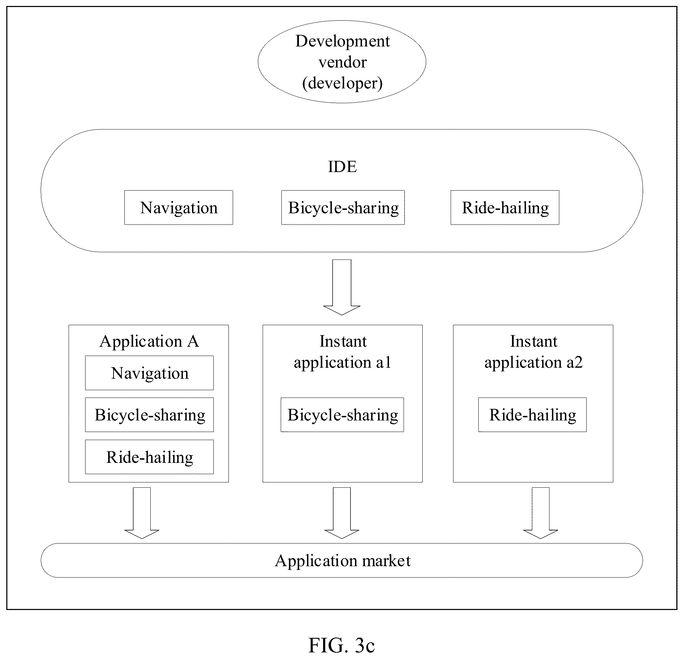

In some actual running scenarios, there may be overlapping data between a plurality of applications. In a possible design, for a development vendor of an application, the application may be developed by a developer. For example, as shown in FIG. 3c, service functions corresponding to an integrated development environment (integrated development environment, IDE) that may be developed by the developer include navigation, bicycle-sharing, and ride-hailing. Correspondingly, the developer may release the three service functions, namely, navigation, bicycle-sharing, and ride-hailing as a complete application A to an application market, and release the bicycle-sharing service function and the ride-hailing service function to the application market as an instant application a1 and an instant application a2 respectively. It should be understood that all applications (including an instant application) that are released to the application market can be downloaded and used by a user. For example, an application B includes a store recommendation service function and a store navigation service function, and an application C includes an SMS message sending service function and an SMS message receiving service function. It should be understood that a development vendor of the application B and the application C may be the same as or different from a development vendor of the application A. This is not limited in this embodiment of this application.

Based on the service functions described in the foregoing scenario example, it can be learned that overlapping data between the application A and the application B includes common location information used to implement a navigation function; overlapping data between the application A, the application B, and the application C includes application mode setting (for example, whether a night mode is enabled), and the application mode setting may keep status information consistent between a plurality of applications; overlapping data between the application A and the instant application a1 includes a cycling route record of the bicycle-sharing; and overlapping data between the application A and the instant application a2 includes a common destination for the ride-hailing. Therefore, to save storage space occupied by applications, it is necessary to improve storage space utilization by sharing data between different applications.

However, in some operating systems, an organization manner of releasing an application to the application market may be: packaging a single application into an independent application package (application package, APP Pack) and separately installing the application. For example, in HarmonyOS^{®}, an app pack contains one or more (HarmonyOS ability package, HAP) packages, and a suffix name of the app pack is ".app". A HAP file contains code, a resource, a third-party library, and an application configuration file of an application, and a file suffix name is ".hap". Package names of HAP packages of app packs corresponding to different applications may be different. Therefore, in an application running state, life cycles of different applications may be completely independent, and the different applications may run in different application sandboxes. Correspondingly, data of the different applications may be completely isolated, and it is difficult to implement data sharing.

An embodiment of this application provides an inter-application data sharing method, to implement data sharing between different applications, reduce resource waste, and improve efficiency of data sharing between the plurality of applications.

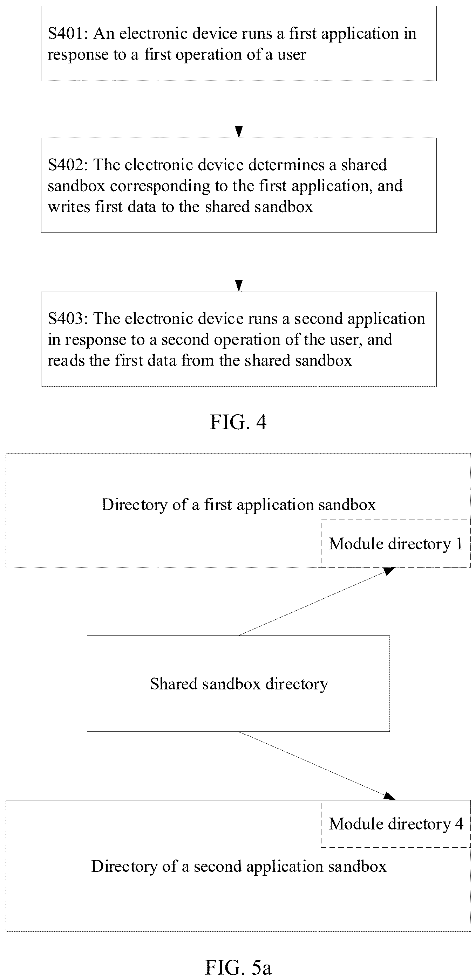

FIG. 4 is a schematic flowchart of an inter-application data sharing method according to an embodiment of this application. The method is applicable to an electronic device, for example, the mobile phone 100 shown in FIG. 1. A user interface of the electronic device in the method includes but is not limited to FIG. 3a and FIG. 3b. Refer to FIG. 4. The following describes the method provided in this embodiment of this application.

S401: The electronic device runs a first application in response to a first operation of a user. For example, the first operation is an operation of starting the first application by the user.

It should be understood that the first application may be any one of the following: the application A, the application B, the application C, the instant application a1, the instant application a2, or the instant application b1 shown in FIG. 3a or FIG. 3b. This is not limited in this embodiment of this application.

In a possible design, the first application and at least one target application may have a same service function. It should be understood that there may be overlapping data of the same service function between different applications.

For example, in a scenario shown in FIG. 3c, applications supported by the electronic device include the application A, the instant application a1, and the instant application a2. Both the application A and the instant application a1 have a bicycle-sharing service function, and both the application A and the instant application a2 have a ride-hailing service function. In this embodiment of this application, assuming that the first application is the application A, the at least one target application includes the instant application a1 and the instant application a2.

In a possible design, for a development vendor of an application, the application may be developed by a developer. The developer may apply for one or more sharing identifiers from an application market. The developer may configure the one or more sharing identifiers in a signature certificate of the application. After completing development, test, and authentication of the application, the developer submits an application releasing application and the signature certificate of the application to the application market. After determining that the signature certificate passes a review, a reviewer of the application market sets an application status to "released", indicating that a release procedure of the application is completed.

Correspondingly, the user may download and use the application by using the electronic device. The foregoing review includes: determining that the sharing identifier in the signed certificate is a sharing identifier belonging to the development vendor. In this way, a correspondence between the sharing identifier and the development vendor of the application prevents another development vendor from stealing data by impersonating an identity, improving data security.

Based on this design, a signature certificate of the first application includes a first sharing identifier. It should be understood that the signature certificate of the first application may include a plurality of first sharing identifiers. This is not limited in this embodiment of this application.

For example, when the first application is released, the electronic device may determine the first sharing identifier configured in the signature certificate of the first application. A configuration manner of the first sharing identifier includes but is not limited to the following configuration manner 1 and configuration manner 2:

Configuration manner 1: The electronic device may determine that the first sharing identifier is a sharing identifier of a development vendor or a developer of the first application. In this case, the signature certificate of the first application includes one first sharing identifier. It should be understood that a same development vendor or a same developer may correspond to a plurality of applications and/or a plurality of instant applications. This is not limited in this embodiment of this application.

The scenario shown in FIG. 3c is still used as an example. It is assumed that a development vendor of the application A is D1, and a signature certificate of the application A includes a sharing identifier of D1.

Configuration manner 2: The first application and the at least one target application have at least two same service functions, which are specifically a service function 1 and a service function 2. Correspondingly, the electronic device may determine that the first sharing identifier is a sharing identifier corresponding to the service function 1 or a sharing identifier corresponding to the service function 2. In this case, at least two first sharing identifiers are configured for the first application.

The scenario shown in FIG. 3c is still used as an example. The application A and the instant application a1 have a same service function (a bicycle-sharing service function), and the application A and the instant application a2 have a same service function (a ride-hailing service function). The electronic device may determine that the first sharing identifier is a sharing identifier corresponding to the bicycle-sharing service function or a sharing identifier corresponding to the ride-hailing service function.

In a possible design, before performing the action shown in step S401, the electronic device may further create a shared sandbox. In some examples, the electronic device may create the shared sandbox based on the first sharing identifier.

Optionally, the electronic device may trigger the action of creating the shared sandbox when detecting a creation instruction; or the electronic device may trigger the action of creating the shared sandbox when the first application and at least one target application that has a same sharing identifier as the first application are installed on the electronic device.

In some examples, when the electronic device receives the creation instruction (that is, detects the creation instruction), the electronic device may trigger the foregoing action of creating the shared sandbox. Correspondingly, after triggering the action of creating the shared sandbox, the electronic device may create the shared sandbox based on a plurality of applications corresponding to the creation instruction. For example, assuming that signature certificates of the plurality of applications corresponding to the creation instruction all include a sharing identifier of a development vendor D2, the electronic device may create the shared sandbox based on the sharing identifier corresponding to D2. D2 may be the same as or different from D1. This is not limited in this embodiment of this application.

In some other examples, when at least two applications installed on the electronic device have a same sharing identifier, the electronic device triggers the foregoing action of creating the shared sandbox, where the shared sandbox is used for data sharing between the at least two applications. The same sharing identifier is a sharing identifier of the shared sandbox.

When a sharing identifier of the applications uses the foregoing configuration manner 1, the sharing identifier of the shared sandbox may be a sharing identifier corresponding to a development vendor or a developer of the at least two applications (for example, the sharing identifier corresponding to D1).

When the sharing identifier of the application uses the foregoing configuration manner 2, the sharing identifier of the shared sandbox may be a sharing identifier corresponding to a same service function of the at least two applications (for example, the sharing identifier corresponding to the service function 1).

The scenario shown in FIG. 3c is used as an example. When both the application A and the instant application a1 are installed on the electronic device, and the application A and the instant application a1 have a same sharing identifier, the action of creating the shared sandbox is triggered. The electronic device may determine that the application A and the instant application a1 have the same service function (the bicycle-sharing service function), that is, the application A and the instant application a1 have a same sharing identifier (a sharing identifier corresponding to the bicycle-sharing service function). The electronic device may further determine that the sharing identifier of the sharing sandbox is the sharing identifier corresponding to the bicycle-sharing service function. Correspondingly, the electronic device may create the sharing sandbox based on the sharing identifier corresponding to the bicycle-sharing service function.

In this embodiment of this application, an application sandbox of the first application is a first application sandbox, and the first application sandbox is data storage space corresponding to the first application. Therefore, the first application can access data corresponding to the first application sandbox. In addition, according to the method shown in embodiments, the first application may further access a corresponding shared sandbox.

Based on the foregoing design, before performing the action shown in step S401, the electronic device may further determine that a sharing identifier of the first application is the same as the sharing identifier of the shared sandbox; and the electronic device may further establish a first mapping relationship, where the first mapping relationship is a mapping relationship between a directory of the first application sandbox and a directory of the shared sandbox.

For example, the electronic device may further determine that a sharing identifier of the application A (the sharing identifier of D1) is the same as the sharing identifier of the shared sandbox (the sharing identifier corresponding to D2); or the electronic device may determine that both the sharing identifier of the application A and the sharing identifier of the shared sandbox are the sharing identifier corresponding to the bicycle-sharing service function.

Optionally, the directory of the first application sandbox includes at least one module directory, and the electronic device establishes a mapping relationship between the module directory and the directory of the shared sandbox, that is, establishes the first mapping relationship.

For example, the directory of the first application sandbox includes one or more HAP directories, and the HAP directory may be used as the module directory. As shown in FIG. 5a, the directory of the first application sandbox includes a module directory 1, and the first mapping relationship is a mapping relationship between the module directory 1 and the directory of the shared sandbox.

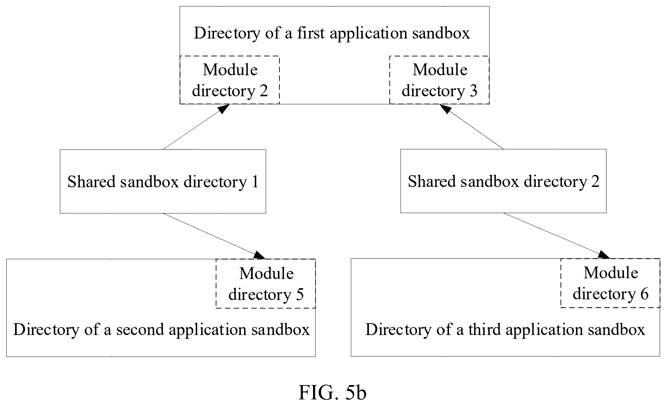

For another example, as shown in FIG. 5b, the directory of the first application sandbox includes a module directory 2 and a module directory 3, the electronic device includes two shared sandboxes that correspond to a shared sandbox directory 1 and a shared sandbox directory 2 respectively, and the first mapping relationship is a mapping relationship between the module directory 2 and the shared sandbox directory 1, or the first mapping relationship is a mapping relationship between the module directory 3 and the shared sandbox directory 2. It should be understood that the electronic device may separately establish a mapping relationship between a plurality of module directories and a directory of one or more shared sandboxes. This is not limited in this embodiment of this application.

Optionally, data storage space corresponding to an application in this application may be internal storage space or external storage space. This is not limited in this embodiment of this application. The internal storage space may be storage space that can be accessed by the user through root, and the like, and the external storage space may be storage space that can be accessed by the user through a file manager, and the like. It should be understood that the user usually cannot access data in the internal storage space.

S402: The electronic device determines the shared sandbox corresponding to the first application, and writes first data to the shared sandbox. The first data is used for sharing with a second application.

It should be understood that the second application may be any one of the following: the application A, the application B, the application C, the instant application a1, the instant application a2, or the instant application b1 shown in FIG. 3a or FIG. 3b. This is not limited in this embodiment of this application.

In some examples, the electronic device may determine the shared sandbox based on the directory of the first application sandbox and the first mapping relationship, to write the first data to the shared sandbox.

For example, as shown in FIG. 5b, assuming that the first mapping relationship is the mapping relationship between the module directory 2 and the shared sandbox directory 1, the electronic device may find the module directory 2 in the directory of the first application sandbox based on the first mapping relationship, and determine the shared sandbox (for example, determine an interface for accessing the shared sandbox).

Optionally, assuming that the first application and the second application have a same service function, before the electronic device performs the action shown in step S402, the electronic device may further determine that the first data is data of the same service function.

The scenario shown in FIG. 3c is still used as an example. The electronic device may determine that the first data is data of the bicycle-sharing service function, or the electronic device may determine that the first data is data of the ride-hailing service function.

S403: The electronic device runs the second application in response to a second operation of the user, and reads the first data from the shared sandbox. For example, the second operation is an operation of starting the second application by the user.

Optionally, before reading the first data from the shared sandbox, the electronic device may detect a third operation of the user. For example, the third operation is that the user generates an access request for the first data by using the electronic device.

In a possible design, the second application is one of the at least one target application.

The scenario shown in FIG. 3c is still used as an example. Both the application A and the instant application a1 have the bicycle-sharing service function, and both the application A and the instant application a2 have the ride-hailing service function. Assuming that the first application is the application A, the second application may be the instant application a1 or the instant application a2.

In a possible design, a signature certificate of the second application includes a second sharing identifier. It should be understood that the signature certificate of the second application may include a plurality of second sharing identifiers. This is not limited in this embodiment of this application.

For example, the electronic device may determine the second sharing identifier configured in the signature certificate of the second application. A configuration manner of the second sharing identifier includes but is not limited to the configuration manner 1 and the configuration manner 2 that are used by the first application. Details are not described herein again.

For example, when the configuration manner 1 is used, assuming that the second application is the instant application a1, and a development vendor of the instant application a1 is D3, the electronic device may determine that a second sharing identifier corresponding to the instant application a1 is a sharing identifier of D3. D3 may be the same as or different from D1 and D2. This is not limited in this embodiment of this application.

For another example, when the configuration manner 2 is used, assuming that the second application is the instant application a1, and the instant application a1 and the application A have the same service function (the bicycle-sharing service function), the electronic device may determine that a second sharing identifier corresponding to the instant application a1 is the sharing identifier corresponding to the bicycle-sharing service function.

In some examples, the second sharing identifier is the same as the first sharing identifier. Before performing the action shown in step S401, the electronic device may create the shared sandbox based on the second sharing identifier.

In a possible design, before performing the action shown in step S403, the electronic device may determine that a sharing identifier of the second application is the same as the sharing identifier of the shared sandbox.

For example, the electronic device may further determine that a sharing identifier of the instant application a1 (the sharing identifier of D3) is the same as the sharing identifier of the shared sandbox (the sharing identifier corresponding to D2); or the electronic device may determine that both the sharing identifier of the instant application a1 and the sharing identifier of the shared sandbox are the sharing identifier corresponding to the bicycle-sharing service function.

In this embodiment of this application, data storage space corresponding to the second application is a second application sandbox, and the second application sandbox is data storage space corresponding to the second application. The second application can access data corresponding to a directory of the second application sandbox. In addition, according to the method shown in embodiments, the second application may further access a corresponding shared sandbox.

Based on the foregoing design, before performing the action shown in step S403, the electronic device may further determine that a sharing identifier of the second application is the same as the sharing identifier of the shared sandbox; and the electronic device may further establish a second mapping relationship, where the second mapping relationship is a mapping relationship between a directory of the second application sandbox and a directory of the shared sandbox. Correspondingly, when performing the action shown in step S403, the electronic device may determine the shared sandbox (for example, may determine an interface for accessing the shared sandbox) based on the directory of the second application sandbox and the second mapping relationship.

The directory of the second application sandbox may include at least one module directory, and the electronic device establishes a mapping relationship between the module directory and the directory of the shared sandbox, that is, establishes the second mapping relationship. In this embodiment of this application, a method for establishing the second mapping relationship by the electronic device may be the same as or different from the foregoing method for establishing the first mapping relationship. This is not limited in this embodiment of this application.

For example, as shown in FIG. 5a, the directory of the second application sandbox includes a module directory 4, and the second mapping relationship is a mapping relationship between the module directory 4 and the directory of the shared sandbox.

For another example, as shown in FIG. 5b, the directory of the second application sandbox includes a module directory 5, and the second mapping relationship is a mapping relationship between the module directory 5 and the shared sandbox directory 1. The applications supported by the electronic device may further include a third device, and data storage space corresponding to the third application is a third application sandbox. In this case, the electronic device may further establish a third mapping relationship, where the third mapping relationship is a mapping relationship between a directory of the third application sandbox and the directory of the shared sandbox. When the directory of the third application sandbox includes a module directory 6, the third mapping relationship may be a mapping relationship between the module directory 6 and the shared sandbox directory 2.

In the example shown in FIG. 5b, the directory of the first application sandbox may be data storage space corresponding to the application A shown in FIG. 3c, the directory of the second application sandbox may be data storage space corresponding to the instant application a1 shown in FIG. 3c, and the directory of the third application sandbox may be data storage space corresponding to the instant application a2 shown in FIG. 3c.

Optionally, when the data storage space corresponding to the second application is the shared sandbox, or when the second application sandbox is the shared sandbox, the second application may directly access data of the shared sandbox.

For example, if the application A includes three service functions: navigation, bicycle-sharing, and ride-hailing, and the instant application a1 includes only one bicycle-sharing service function, the service functions of the application A completely cover the service function of the instant application a1. In this case, the electronic device may use the data storage space (for example, an application sandbox) of the instant application a1 as the shared sandbox.

In a possible design, when running the first application, the electronic device detects an interface jump instruction on a user interface of the first application; in response to the interface jump instruction, the electronic device switches the user interface of the first application from foreground running to background running; and the electronic device runs the second application, and displays a user interface of the second application. In other words, when a target jump application corresponding to the interface jump instruction is the second application, and the sharing identifier of the second application is the same as the sharing identifier of the first application, the electronic device may directly jump from the interface of the first application to the interface of the second application without user authorization; or when the target jump application corresponding to the interface jump instruction is not the second application, the electronic device needs to obtain user authorization before a user interface is jumped from the interface of the first application to the interface of the second application.

In this way, when sharing identifiers of different applications are the same, the electronic device may directly implement interface jump when detecting the interface jump instruction. In comparison with a conventional method in which a user authorizes determining of whether to jump, this design can reduce required operation steps of the user when the plurality of applications have a same service function, and improve user experience.

Optionally, the user interface of the first application may be a first login interface, the user interface of the second application may be a second login interface, and the first data may include account data and password data. Correspondingly, after the second login interface of the second application is displayed, the electronic device may read the account data and the password data from the shared sandbox, to implement user login.

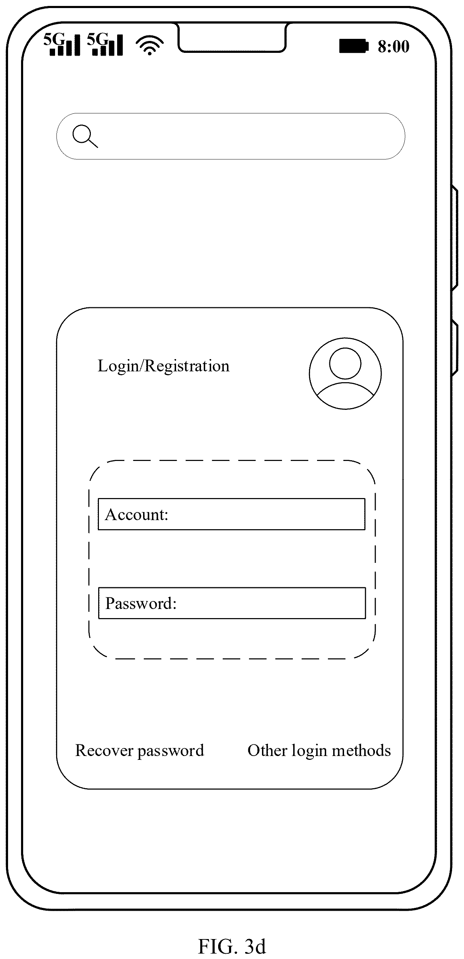

Based on the scenario shown in FIG. 3c, an account and a password used to log in to the instant application a1 may be the same as those used to log in to the application A. An embodiment of this application provides an example diagram of a login/registration interface of the second application. As shown in FIG. 3d, it can be learned that to-be-input data on the login interface includes an account and a password. It is assumed that the first application is the application A and the second application is the instant application a1. When running the instant application a1, the electronic device may read an account and a password by accessing a shared sandbox of the application A and the instant application a1, to complete login. Based on this, when running the instant application a1, the user does not need to input the account and the password again. This reduces redundant user operations, and improves improve user experience.

In a possible design, when the first data is configuration information, the electronic device runs the second application, and updates a configuration file of the second application based on the configuration information.

In some examples, the first application is the application A, and the second application is the instant application a1 or the instant application a2. For example, when the application A is run, the first data written by the electronic device to the shared sandbox is: selecting "theme 1" as the theme style. The instant application a1 or the instant application a2 may read the first data from the shared sandbox: selecting "theme 1" as the theme style. Assuming that the first data is the configuration information, the electronic device may further configure, based on the configuration information, a theme style corresponding to the instant application a1 or the instant application a2 as "theme 1". Assuming that the first data is not the configuration information, the configuration information may alternatively be written for the instant application a1 or the instant application a2, so that the application A updates the configuration file. This is not limited in this embodiment of this application.

For example, as shown in the diagram of the display interface shown in FIG. 3a or FIG. 3b, the instant application appears in a form of a service widget, and the electronic device may refresh the service widget by using the foregoing design. The service widget is a service form, and may provide a visual component that is more intuitive and concise than an application program (application, APP), to directly present, to the user in a form of an interactive service widget, a service or content that the user is most concerned about. In addition, the service widget may further track a change in the service or content over time, and display a latest service or latest content. For example, a service widget corresponding to a weather app displays timely weather information. The widget may be embedded into various apps or interaction scenarios to better satisfy a user requirement.

In some examples, a widget, a widget, a widget, or the like is also applicable to a scenario to which the service widget is applicable.

For example, the first application is the application A, and the second application is the instant application a1. Assuming that a background color (BackgroundColor) of the application A and the instant application a1 is blue (blue) initially, configuration data of a service widget corresponding to the instant application a1 includes: {"BackgroundColor":"blue"}. If the user needs to change background colors of the application A and the instant application a1 to red, when running the application A, the electronic device may write, to the shared sandbox by using the method shown in step S402, the first data that indicates to change the background color to red, where the first data includes {"BackgroundColor":"red"}. Correspondingly, when running the instant application a1, the electronic device may read the first data from the shared sandbox by using the method shown in step S403. Further, the electronic device may further update the background color of the service widget of the instant application a1 to red based on the first data, to refresh the service widget.

According to the inter-application data sharing method provided in this embodiment of this application, the electronic device can enable the first application and the second application to write and read the data in the shared sandbox. Therefore, data sharing between the first application and the second application can be implemented when there is an isolation mechanism in the first application sandbox. This reduces resource waste, improves efficiency of data sharing, and enhances user experience. In addition, according to the method, data synchronization does not need to be implemented through explicit cloud communication or local inter-process communication. This improves convenience of use for a development vendor or a developer, saves resources of the electronic device, and reduces system power consumption of the electronic device.

Based on the method provided in the embodiment shown in FIG. 4, this application further provides an example of data sharing. In this example, applications supported by an electronic device include an APP 1, an IAPP 1, an IAPP 2, and an IAPP 3. The APP 1 has overlapping data with the IAPP 1, the IAPP 2, and the IAPP 3. Based on this, an inter-application data sharing method of the APP 1, the IAPP 1, the IAPP 2, and the IAPP 3 includes but is not limited to the following steps:
Step 1: When developing the applications, a development vendor or a developer of the applications may apply for three sharing identifiers from an application market: a mark (mark) 1, a mark 2, and a mark 3. The development vendor or the developer configures the mark 1, the mark 2, and the mark 3 on the APP 1 by using the electronic device, configures the mark 1 on the IAPP 1, configures the mark 2 on the IAPP 2, and configures the mark 3 on the IAPP 3.
Step 2: After the APP 1, the IAPP 1, the IAPP 2, and the IAPP 3 complete a release procedure, the electronic device separately creates three shared sandboxes based on the sharing identifiers configured on the APP 1, the IAPP 1, the IAPP 2, and the IAPP 3, where sharing identifiers of the three shared sandboxes are a mark 1, a mark 2, and a mark 3.
Step 3: The electronic device separately checks consistency of the sharing identifiers of the three shared sandboxes with the sharing identifiers of the APP 1, the sharing identifier of the IAPP 1, the sharing identifier of the IAPP 2, and the sharing identifier of the IAPP 3, and separately establishes mapping relationships between the three shared sandboxes and four application sandboxes when check results are consistent.

In some examples, the electronic device may separately create, by using mapping relationships between a directory of any shared sandbox and a sandbox directory of the APP 1, a sandbox directory of the IAPP 1, a sandbox directory of the IAPP 2, and a sandbox directory of the IAPP 3, interfaces for accessing the three shared sandboxes.

Step 4: When running the APP 1, the electronic device determines that data (data) 1 is overlapping data between the APP 1 and the IAPP 1; the electronic device determines, based on a mapping relationship between the sandbox directory of the APP 1 and a directory of a shared sandbox whose sharing identifier is the mark 1, an interface for accessing the shared sandbox; and the electronic device writes, by using the interface, the data 1 to the shared sandbox whose sharing identifier is the mark 1.

Step 5: When running the IAPP 1, the electronic device determines, based on a mapping relationship between the sandbox directory of the IAPP 1 and the directory of the shared sandbox, an interface for accessing the shared sandbox; and the electronic device reads, by using the interface, the data 1 from the shared sandbox whose sharing identifier is the mark 1.

Step 6: It is assumed that content of the data 1 is configuration information. For example, the data 1 is used to configure a night mode. When running the IAPP 1, the electronic device may further update configuration of the IAPP 1 to the night mode based on the data 1.

Step 7: When running the APP 1, the electronic device detects an interface jump instruction, where a target jump application corresponding to the interface jump instruction is the IAPP 1. Because both the sharing identifiers of the APP 1 and the sharing identifier of the IAPP 1 include the mark 1, the electronic device jumps from an interface of the APP 1 to an interface of the IAPP 1 in response to the interface jump instruction.

On the contrary, the IAPP 1 may alternatively write data, so that the APP 1 reads the data. A specific solution may be understood by analogy with the foregoing embodiments, and details are not described herein again.

It should be understood that step 6 and step 7 are optional steps, and the electronic device may determine, according to a specific embodiment, whether to perform the steps.

In the foregoing embodiments provided in this application, the method provided in embodiments of this application is described from a perspective of an electronic device serving as an execution body. To implement functions in the foregoing method provided in embodiments of this application, the electronic device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

An embodiment of this application provides an inter-application data sharing apparatus. The data sharing apparatus includes the method for writing the first data in any one of the possible designs or modules/units for performing the method for reading the first data in any one of the possible designs. These modules/units may be implemented by hardware, or may be implemented by hardware executing corresponding software. For related features of a specific implementation of the inter-application data sharing apparatus, refer to the method in the foregoing embodiment of this application. Details are not described herein again.

Based on a same technical concept, this application further provides an electronic device. The electronic device includes at least one processor, at least one memory, and a micro control unit. The at least one memory stores computer program instructions. When the electronic device runs, the micro control unit performs a function performed by the electronic device in the inter-application data sharing method described in the embodiment of this application. For example, the micro control unit performs S401 to S403 performed by the electronic device in the embodiment shown in FIG. 4.

Based on the foregoing embodiment, this application further provides an electronic device. The electronic device includes at least one memory and a micro control unit. The at least one memory stores computer program instructions. When the electronic device runs, the micro control unit performs a function performed by the electronic device in the inter-application data sharing method described in the embodiment of this application. For example, the micro control unit performs S401 to S403 performed by the electronic device in the embodiment shown in FIG. 4.

Based on a same technical concept, an embodiment of this application further provides a computer storage medium. The computer-readable storage medium includes a computer program. When the computer program is run on an electronic device, the electronic device is enabled to perform the foregoing method in the foregoing embodiment.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on a same technical concept, an embodiment of this application further provides a computer program product. The computer program product includes instructions. When the instructions are executed, a computer is enabled to perform the foregoing method in the foregoing embodiment.

Based on a same technical conception, an embodiment of this application further provides a chip. The chip includes a processor and a micro control unit. The processor sends accessory management information to the micro control unit, and the micro control unit implements the method in the foregoing embodiment based on the accessory management information.

Based on the foregoing embodiments, an embodiment of this application further provides a chip. The chip is configured to read a computer program stored in a memory, to implement the method provided in the foregoing embodiment. Optionally, the chip may include a processor and a memory. The processor is coupled to the memory, and configured to read the computer program stored in the memory, to implement the method provided in the foregoing embodiments.

Based on the foregoing embodiments, an embodiment of this application provides a chip system. The chip system includes a processor configured to support a computer apparatus in implementing functions related to the electronic device in the foregoing embodiments. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. An inter-application data sharing method, applied to an electronic device, wherein the method comprises:
running a first application in response to a first operation of a user;
determining a shared sandbox corresponding to the first application, and writing first data of the first application to the shared sandbox, wherein the first data is used for sharing with a second application; and
running the second application in response to a second operation of the user, and reading the first data from the shared sandbox.

2. The method according to claim 1, wherein the method further comprises:
creating the shared sandbox based on the first application and the second application;
establishing a first mapping relationship, wherein the first mapping relationship is a mapping relationship between a directory of a first application sandbox and a directory of the shared sandbox, and the first application sandbox is data storage space corresponding to the first application; and
establishing a second mapping relationship, wherein the second mapping relationship is a mapping relationship between a directory of a second application sandbox and the directory of the shared sandbox, and the second application sandbox is data storage space corresponding to the second application.

3. The method according to claim 2, wherein a signature certificate of the first application comprises a first sharing identifier, and a signature certificate of the second application comprises a second sharing identifier;
the first sharing identifier is the same as the second sharing identifier; and
creating the shared sandbox comprises:
creating the shared sandbox based on the first sharing identifier or the second sharing identifier.

4. The method according to claim 2 or 3, wherein
determining the shared sandbox corresponding to the first application comprises:
determining the shared sandbox based on the directory of the first application sandbox and the first mapping relationship; and
reading the first data from the shared sandbox comprises:
determining the shared sandbox based on the directory of the second application sandbox and the second mapping relationship; and
reading the first data from the shared sandbox.

5. The method according to any one of claims 1 to 4, wherein running the second application in response to the second operation of the user comprises:
detecting an interface jump instruction on a user interface of the first application;
in response to the interface jump instruction, switching the first application from foreground running to background running; and
running the second application, and displaying a user interface of the second application.

6. The method according to claim 5, wherein the user interface of the first application is a first login interface, the user interface of the second application is a second login interface, and the first data comprises account data and password data.

7. The method according to any one of claims 1 to 6, wherein the first application and at least one target application have a same service function;
the second application is one of the at least one target application; and
before determining the shared sandbox corresponding to the first application, the method further comprises:
determining that the first data is data of the same service function.

8. The method according to any one of claims 1 to 7, wherein the first data is configuration information, and the method further comprises:
when running the second application, updating a configuration file of the second application based on the configuration information.

9. An electronic device, comprising a processor, a micro control unit, and a memory, wherein
the memory stores one or more computer programs; and
when the one or more computer programs stored in the memory are executed by the processor and the micro control unit, the electronic device is enabled to perform the method according to any one of claims 1 to 8.

10. A computer-readable storage medium, wherein the computer-readable storage medium stores instructions, and when the instructions are run on an electronic device, the electronic device is enabled to perform the method according to any one of claims 1 to 8.

11. A chip, wherein the chip comprises a processor and a micro control unit, the processor sends accessory management information to the micro control unit, and the micro control unit implements the method according to any one of claims 1 to 8 based on the accessory management information.

12. A computer program product, wherein when the computer program product runs on an electronic device, the electronic device is enabled to perform the method according to any one of claims 1 to 8.

13. An inter-application data sharing apparatus, comprising a module configured to perform the method according to any one of claims 1 to 8.
